# EUROPÄISCHE PATENTSCHRIFT

(11) **EP 2 423 010 B1**
(45) Veröffentlichungstag und Bekanntmachung des Hinweises auf die Patenterteilung: **27.03.2013**
(21) Anmeldenummer: 11172881.2
(22) Anmeldetag: 06.07.2011
(51) Int. Cl.: B60G 7/02, B62D 65/12, F16F 1/38, B60G 7/00, F16B 5/02, B60G 9/00, B23P 15/00

(54) **Fahrzeugachslenker sowie Stahlgummibuchse zur Verwendung in einem Fahrzeuglenker**
Vehicle axle steerer and steel rubber socket for use in a vehicle steerer
Guide d'essieu de véhicule et douille en caoutchouc d'acier pour l'utilisation dans un volant de véhicule

(30) Priorität: 31.08.2010 DE 102010036027
(43) Veröffentlichungstag der Anmeldung: 29.02.2012
(73) Patentinhaber: BPW Bergische Achsen KG, 51674 Wiehl (DE)
(72) Erfinder: Gmeiner, Swen, 51709 Marienheide (DE)
(74) Vertreter: Christophersen, Ulrich Rudolf

(56) Entgegenhaltungen:
- EP-A1- 2 106 934
- EP-A2- 0 485 697
- EP-A2- 1 245 415
- WO-A1-2010/066232
- DE-A1- 3 228 051
- DE-A1- 3 722 997
- DE-A1-102006 015 671
- DE-A1-102007 006 709
- GB-A- 257 009
- GB-A- 2 396 140
- JP-A- 8 312 636
- JP-A- 2010 030 382
- US-A- 1 911 866
- US-A1- 2007 108 717

## Beschreibung

Die Erfindung betrifft einen Fahrzeugachslenker nach dem Oberbegriff des Patentanspruchs 1.

Aus der DE 10 2006 015 671 A1 ist ein Fahrzeugachslenker mit einem Achsbefestigungsbereich für die Achse des Fahrzeuges und mit einer in Fahrzeugrichtung vorne angeordneten Durchgangsöffnung bekannt. In der Durchgangsöffnung sitzt eine üblicherweise als Stahlgummibuchse ausgebildete Elastomerbuchse, die Bestandteil des den Achslenker gegenüber dem Fahrzeug abstützenden Schwenklagers ist. Die Stahlgummibuchse ist in die Durchgangsöffnung des Achslenkers durch axiales Hineinpressen eingesetzt, ohne dass besondere Maßnahmen zur weiteren axialen Lagesicherung der Stahlgummibuchse getroffen sind.

Ähnliche Stahlgummibuchsen für Fahrzeugachslenker sind aus der JP 8/312636, DE 32 28 051 A und der US 1,911,866 bekannt.

Es hat sich in der Praxis als wünschenswert herausgestellt, hinsichtlich der Lage der Stahlgummibuchse in der Durchgangsöffnung des Achslenkers zu einer gewissen Längssicherung der Stahlgummibuchse zu kommen, wobei diese Längssicherung von zumindest solcher Güte sein soll, dass es beim Betrieb des Fahrzeugs zu keinen nennenswerten Relativbewegungen zwischen der Stahlgummibuchse und dem Achslenker kommt.

Zur Erzielung einer gewissen Längssicherung der Lage einer Gummibuchse in der Durchgangsöffnung eines Achslenkers wird in der US 2007/0108717 A ein Öffnungsprofil mit radial eingezogenen Enden und einem im übrigen zylindrischen Verlauf vorgeschlagen.

Ziel der Erfindung ist ein Fahrzeugachslenker mit einem als Gussteil hergestellten Achslenker, der sich durch ein reduziertes Gewicht auszeichnet, gießtechnisch eine erleichterte Entformbarkeit zeigt und einen sicheren Sitz der Stahlgummibuchse in der Durchgangsöffnung des Achslenkers ermöglicht.

Zur Lösung dieser Aufgabe wird bei einem Fahrzeugachslenker mit den Merkmalen des Oberbegriffs vorgeschlagen, dass die Weite von beiden Enden der Durchgangsöffnung zu deren Längsmitte jeweils zunimmt, dass der Fahrzeugachslenker aus einem Gussteil mit einem Hohlraum besteht, der mit der Durchgangsöffnung in Verbindung steht, und dass im Bereich der Verbindung des Hohlraums mit der Durchgangsöffnung ein Stopfen angeordnet und der Durchgangsöffnung zugewandt so gestaltet ist, dass er deren Querschnitt aufnimmt und vervollständigt.

Indem der Querschnitt der Durchgangsöffnung von beiden Enden zur Längsmitte hin jeweils zunimmt, kommt es zu einer gewissen Zentrierung in Längsrichtung der in die Durchgangsöffnung eingesetzten Stahlgummibuchse mit der Folge, dass im Fahrbetrieb die Gefahr von Relativbewegungen der Stahlgummibuchse innerhalb der Durchgangsöffnung reduziert wird. Ferner wird vorgeschlagen, dass der Achslenker aus einem Gussteil besteht, welches zur Gewichtsreduktion mit einem Hohlraum versehen ist, der mit der Durchgangsöffnung in Verbindung steht. Im Bereich der Verbindung ist des Hohlraums mit der Durchgangsöffnung ein Stopfen angeordnet, der der Durchgangsöffnung zugewandt so gestaltet ist, dass er deren Querschnitt aufnimmt und vervollständigt. Bei eingesetztem Stopfen ergibt sich daher über Umfang und Tiefe der Durchgangsöffnung eine vollständige Wandung. Nach dem Einsetzen der Stahlgummibuchse ist diese keinen örtlich unterschiedlichen Flächenpressungen mit negativen Folgen für ihr Verformungsverhalten ausgesetzt.

Der Querschnitt der Durchgangsöffnung ist vorzugsweise kreisförmig rund, kann aber auch z. B. oval oder elliptisch gestaltet sein.

Falls der Querschnitt der Durchgangsöffnung kreisförmig ist, nimmt der Durchmesser des Querschnitts von beiden Enden der Durchgangsöffnung zu deren Längsmitte hin jeweils zu. Besonders bevorzugt ist eine Gestaltung, bei der die Durchgangsöffnung zu beiden Seiten ihrer Längsmitte konisch verlaufend gestaltet ist, wobei der Konuswinkel zwischen 0,5° und 2° beträgt, und vorzugsweise 1°.

Der Gummiring der Stahlgummibuchse kann einen kreisrunden Querschnitt aufweisen, oder einen ovalen oder elliptischen Querschnitt. Falls der Querschnitt kreisförmig ist, nimmt sein Durchmesser von beiden Rändern der Mantelfläche zu der Längsmitte der Mantelfläche hin jeweils zu.

Mit einer Ausgestaltung der Stahlgummibuchse wird vorgeschlagen, dass der Gummiring zu beiden Seiten der Längsmitte seiner Mantelfläche konisch verlaufend gestaltet ist.

Eine weitere Ausgestaltung der Stahlgummibuchse ist gekennzeichnet durch ein vorzugsweise aus Kunststoff bestehendes Distanzstück, welches mit der zylindrischen Innenseite der Stahlbuchse verbunden, und mit einer Durchgangsöffnung für die Schraube bzw. den Bolzen versehen ist. Das Distanzstück überbrückt den radialen Abstand zwischen der zylindrischen Innenseite der Stahlbuchse und dem durch die Stahlgummibuchse hindurchführenden Bolzen und besteht aus einem Werkstoff, vorzugsweise Kunststoff, der deutlich leichter ist als der Eisenwerkstoff der Stahlbuchse. Dadurch lässt sich auch bei Kombination mit einem schlanken Bolzen bzw. einer schlanken Schraube das beim Stand der Technik vor allem durch den Gewichtsanteil der Stahlbuchse bestimmte Gesamtgewicht der Stahlgummibuchse niedrig halten.

Um der besonderen Belastungssituation im Bereich des Schwenklagers des Achslenkers gerecht zu werden, kann die Stahlbuchse, bezogen auf die Mantelfläche des Gummirings, exzentrisch in dem Gummiring angeordnet sein.

Gemäß einer weiteren Ausgestaltung ist der Gummiring auf die Außenseite der Stahlbuchse aufvulkanisiert, und das Distanzstück und die Stahlbuchse sind durch einen Presssitz miteinander verbunden. Ferner bevorzugt ist eine Ausgestaltung, bei der das Distanzstück ein Strangpressprofil ist.

Um das Gewicht der Stahlgummibuchse weiter zu reduzieren und Material dort einzusparen, wo dieses aus statischen und dynamischen Gründen nicht unbedingt benötigt wird, wird mit einer weiteren Ausgestaltung vorgeschlagen, dass das Distanzstück auf seiner mit der Stahlbuchse verbundenen Außenseite derart mit nach außen offenen Kanälen oder Vertiefungen versehen ist, dass das Distanzstück und die Stahlbuchse nicht vollflächig, sondern nur partiell in Kontakt stehen.

Ferner wird vorgeschlagen, dass die axiale Länge des Distanzstücks gleich oder geringer als die axiale Länge der Stahlbuchse ist.

Ferner wird vorgeschlagen, dass die Durchgangsöffnung des Distanzstücks zentrisch bzw. koaxial zu der Innenseite der Stahlbuchse ist.

Ferner wird vorgeschlagen dass der Gummiring an seinem Außenumfang eine in Umfangsrichtung wirksame Formschlussstruktur, z. B. in Gestalt einer Kerbe, aufweist. Eine solche Formschlussstruktur stellt, in Verbindung mit einer korrespondierenden Struktur an der Durchgangsöffnung des Achslenkers, die richtige Drehlage der Stahlgummibuchse bei deren Montage sicher.

Weitere Einzelheiten und Vorteile ergeben sich aus der nachfolgenden Beschreibung von Ausführungsbeispielen, wobei auf die Zeichnungen Bezug genommen wird. Darin zeigen:
- Fig. 1: einen Längsschnitt durch einen Fahrzeugachslenker mit eingesetzter Stahlgummibuchse;
- Fig. 2: in einer perspektivischen Ansicht nur den Fahrzeugachslenker ohne die Stahlgummibuchse und ohne den Verschlussstopfen,
- Fig. 3: einen Längsschnitt durch den Fahrzeugachslenker nach Fig. 2;
- Fig. 4: einen längs durch den beim Gießen des Fahrzeugachslenkers verwendeten Gießkern;
- Fig. 5: den Verschlussstopfen in perspektivischer Darstellung;
- Fig. 6: den Verschlussstopfen in einer anderen perspektivischen Darstellung;
- Fig. 7: die Stahlgummibuchse in einer perspektivischen Darstellung;
- Fig. 8: einen Schnitt durch die Stahlgummibuchse in der Ebene deren Längsachse und
- Fig. 9: einen Schnitt durch die in der Durchgangsöffnung des Achslenkers sitzende Stahlgummibuchse entsprechend der in Fig. 1 eingezeichneten Schnittebene IXIX.

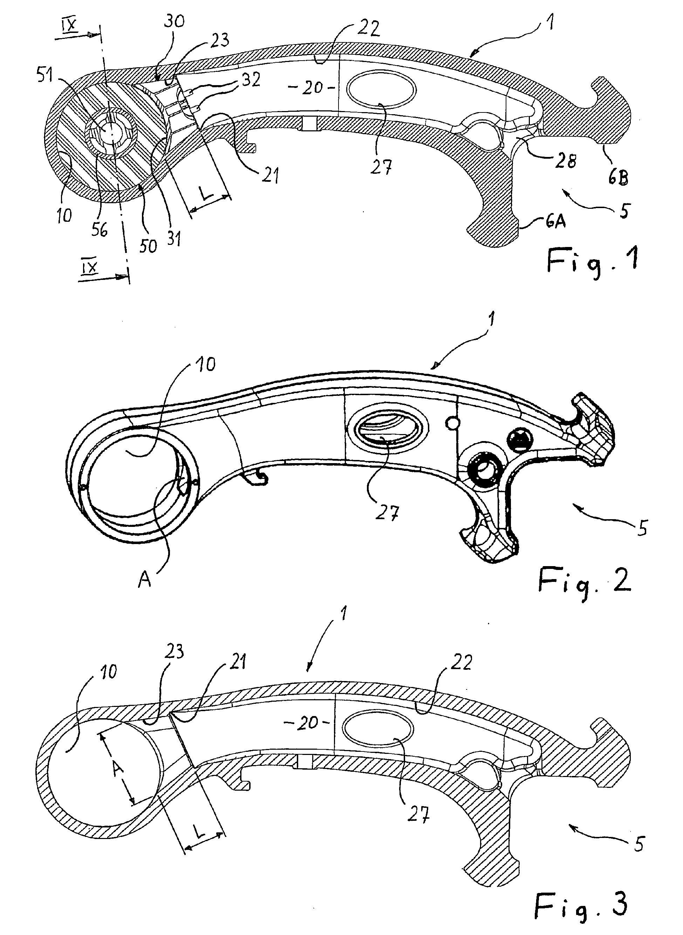

Der in Fig. 1 im Schnitt wiedergegebene Achslenker 1 ist Bestandteil des Fahrwerks eines Schwerlast-Anhängerfahrzeuges wie z. B. eines Lkw-Anhängers oder -Aufliegers. Bestandteil des Chassis solcher Anhängerfahrzeuge sind starre Stützen, an denen der jeweilige Achslenker 1 im Bereich seines in Fahrtrichtung vorderen Endes angelenkt ist. Diese Anlenkung des Achslenkers 1 ist üblicherweise als Schwenklager gestaltet. In die dort angeordnete, das Schwenkauge des Achslenkers 1 bildende Durchgangsöffnung 10 ist eine Elastomerbuchse 50 eingesetzt, durch deren im Wesentlichen zentral angeordnete Bohrung 51 ein in den Figuren nicht wiedergegebener Bolzen hindurchgesetzt ist. Die beiden Enden des Bolzens sitzen in korrespondierenden Bohrungen in der chassisfesten Stütze. Mit dem Bolzen werden die Seitenwände der Stütze gegen die Stirnflächen einer Stahlbuchse 56 gezogen, so dass die Stahlbuchse 56 reibschlüssig zwischen den Seitenwänden festsitzt. Der Bolzen bildet auf diese Weise das Zentrum des Schwenklagers, um das, abgestützt durch die Elastomerbuchse 50, der Achslenker 1 in Bezug auf das Fahrwerk des Anhängerfahrzeug schwenkbar ist.

Der Achslenker 1 ist außerdem, horizontal beabstandet zu der quer zur Fahrtrichtung ausgerichteten Durchgangsöffnung 10, mit einem Achsbefestigungsbereich 5 für die Fahrzeugachse versehen. Diese Fahrzeugachse ist bei Schwerlastfahrzeugen üblicherweise ein Achsrohr, welches in gleicher Weise mit dem in Fahrtrichtung links, wie mit dem in Fahrtrichtung rechts angeordneten Achslenker 1 verbunden ist. Da im vorliegenden Fall dieses Achsrohr einen im Wesentlichen quadratischen Querschnitt aufweist, besteht der Achsbefestigungsbereich 5 aus einem Winkel mit leistenförmigen Anlageflächen 6A, 6B, die sich von vorne her bzw. von oben her an dem quadratischen Achsrohr abstützen.

Gemäß Fig. 1 erstreckt sich der Achsbefestigungsbereich 5 nur über in etwa die Hälfte des Umfangs der Fahrzeugachse. Der Bereich wird komplettiert durch einen weitere, korrespondierend gestalteten Rechteckwinkel, welcher Bestandteil eines zweiten Achslenkerteils ist und sich mit entsprechenden leistenförmigen Anlageflächen von unten und von hinten her gegen die Fahrzeugachse abstützt. Die so korrespondierend gestalteten Befestigungsbereiche 5 werden unter Verwendung zweier U-förmiger Bügel gegeneinander gezogen, wie dies z. B. in der WO 2010/066232 A1 beschrieben ist. Sofern der Achslenker im Rahmen einer luftgefederten Fahrzeugachse außerdem der unteren Abstützung einer Luftfeder dient, kann sich eine entsprechende Auflagefläche für die Luftfeder an diesem zweiten, hinteren Achslenkerteil befinden, wie dies ebenfalls in der WO 2010/066232 A1 im Einzelnen beschrieben ist.

Der Achslenker 1 besteht aus Guss und insbesondere Sphäroguss. Für größtmögliche Stabilität ist er als ein Hohlkörper mit einem über den größten Teil der Länge des Achslenkers reichenden Hohlraum 20 gestaltet. Der Hohlraum 20 steht über eine Öffnung A mit der sich quer zu dem Hohlraum und quer zur Fahrtrichtung erstreckenden Durchgangsöffnung 10 in Verbindung. Die im Gießprozess geformte und daher einstückige Durchgangsöffnung 10 ist von vorzugsweise kreisrundem Querschnitt, der allerdings über die Länge der Durchgangsöffnung nicht konstant ist, wie im folgenden noch näher beschrieben werden wird.

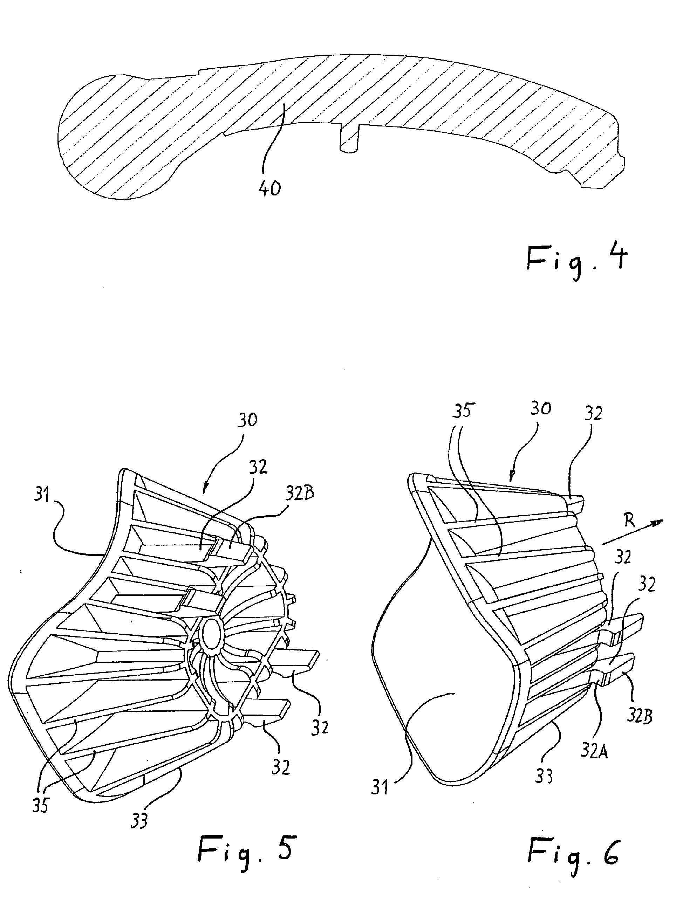

Der bei der Herstellung des Achslenkers verwendete Gießkern 40 ist in Figur 4 wiedergegeben.

In Fig. 3 sind Einzelheiten der Öffnung A wiedergegeben. Ausgehend von der Durchgangsöffnung 10 weist der Hohlraum 20 zunächst einen sich verengenden Längsabschnitt L auf, an den sich dann eine Erweiterung 21 in Gestalt eines allseitigen Hinterschnitts in der Hohlraumkontur anschließt. Ab dieser Erweiterung 21 verläuft dann die weitere Hohlraumkontur 22 im Wesentlichen ohne größere Vor- oder Rücksprünge.

Auf dem sich verengenden Längsabschnitt L hat die Wandung 23 des Hohlraums im Wesentlichen die Gestalt eines Vierkant-Prismenstumpfes, d. h. diese Wandung 23 verjüngt sich in beide Richtungen bis zum Erreichen der allseitigen Erweiterung 21.

Die Fig. 2 lässt aufgrund der perspektivischen Darstellung erkennen, dass die Öffnung A dazu führt, dass die Mantelfläche der Durchgangsöffnung 10 unvollständig ist. Würde in die Durchgangsöffnung die in den Figuren 1, 7, 8 und 9 wiedergegebene Elastomerbuchse 50 ohne anderweitige Maßnahmen eingesetzt, wäre die Elastomerbuchse 50 nicht vollständig durch eine Mantelfläche umschlossen mit der Folge, dass die Elastomerbuchse 50 je nach Belastungszustand und -Richtung nicht das ihr zugedachte Verformungsverhalten zeigen würde.

Daher ist gemäß Fig. 1 im betriebsfertigen Zustand des Fahrzeugachslenkers die Öffnung A durch einen Stopfen 30 verschlossen, der vorzugsweise als Kunststoff-Spritzteil gestaltet ist. Der Stopfen 30 wird, bei noch nicht montierter Elastomerbuchse 50, durch die Durchgangsöffnung 10 hindurch in den Hohlraum des Achslenkers in Fahrzeuglängsrichtung eingesetzt. Fig. 1 lässt erkennen, dass der Stopfen 30 eine sich in Einsetzrichtung R verjüngende Kontur 33 aufweist, die im Wesentlichen dieselbe Kontur eines Vierkant-Prismenstumpfes aufweist, die auch die Wandung 23 auf den Längsabschnitt L zeigt. Zur Durchgangsöffnung 10 hin und zum Verschließen der Öffnung A ist der Stopfen 30 so gestaltet, dass er die Form der Mantelfläche der Durchgangsöffnung 10 übernimmt bzw. in Umfangsrichtung vervollständigt. Hierzu ist der Verschlussstopfen 30 mit einer konkav gewölbten Außenfläche 31 von im Wesentlichen rinnenförmiger Gestalt versehen, die die Gestalt der Mantelfläche der Durchgangsöffnung 10 übernimmt bzw. in Umfangsrichtung vervollständigt. Bei eingesetztem Verschlussstopfen 30 ist daher nicht nur die Öffnung A verschlossen, sondern es ergibt sich für die Durchgangsöffnung 10 eine über deren Umfang und Tiefe vollständige Wandung.

Die Figuren 5 und 6 zeigen ausschließlich den Stopfen bzw. Verschlussstopfen 30. Dessen sich in Einsetzrichtung R verjüngende Kontur 33 wird durch die Außenränder von Rippen 35 gebildet, die sich in Längsrichtung des Stopfens 30 erstrecken. Die sind von fertigungstechnischem Vorteil und sparen Material, wenn der Stopfen 30 einstückig als Kunststoff-Spritzteil hergestellt ist. Ebenfalls einstückig angeformt sind Halteelemente 32, an denen nach außen über die sich verjüngende Kontur 33 hervorstehende Verriegelungsstrukturen 32A ausgebildet sind. Ist der Stopfen 30 vollständig in den Längsabschnitt L des Hohlraums 20 eingesetzt, verriegeln die Verriegelungsstrukturen 32A hinter den Erweiterungen 21. In Einsetzrichtung R sind an den Halteelementen 32 jeweils Einführschrägen 32B ausgebildet, die das Ausweichen nach innen hin der als federnde Zungen gestalteten Halteelemente 32 beim Einsetzen des Stopfens 30 erleichtern.

Ist der Stopfen 30 eingesetzt, wird zur Vervollständigung des Fahrzeugachslenkers die Elastomerbuchse 50 in Richtung ihrer Längsachse in die Durchgangsöffnung 10 eingepresst.

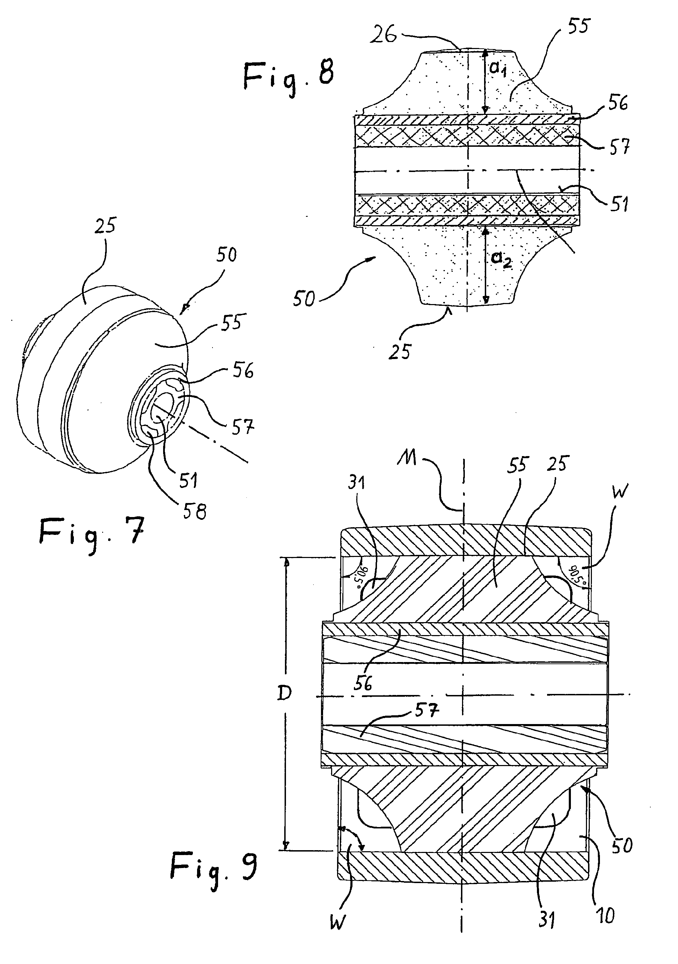

Als Elastomerbuchse 50 des Fahrzeugachslenkers dient eine Stahlgummibuchse, deren Einzelheiten im Folgenden anhand der Figuren 7 und 8 erläutert werden.

Die Stahlgummibuchse 50 besteht aus insgesamt drei Bestandteilen, nämlich, von radial außen nach radial innen, einem Gummiring 55, einer Stahlbuchse 56 und einem Distanzstück 57. Der Gummiring 55 besteht aus Kautschuk oder einem Elastomer mit zugleich Federungs-und Dämpfungsverhalten. Die Stahlbuchse 56 in Gestalt einer Hülse besteht vorzugsweise aus einer ausreichend festen Stahlverbindung. Bei der Werkstoffauswahl der Hülse 56 ist neben der radialen Festigkeit auch die Druckfestigkeit in axialer Richtung, und vor allem die gute Vulkanisierbarkeit mit dem Gummiring 55 von Bedeutung. Das Distanzstück 57 besteht aus Kunststoff. Sein spezifisches Gewicht ist deutlich geringer, als das spezifische Gewicht der Stahlhülse 56.

Der Gummiring 55 ist mit seiner zylindrischen Innenwandung auf die zylindrische Außenwandung der Stahlbuchse 56 aufvulkanisiert. Zur Erzielung einer hinreichend großen Vulkanisierfläche ist der Außendurchmesser der Stahlbuchse 56 groß dimensioniert, und ebenso die axiale Breite dieser Vulkanisierfläche.

Für ein günstiges Verformungsverhalten besteht der Gummiring 55 aus Vollmaterial. Er weist im Bereich der Vulkanisierung einen Maximalwert an axialer Breite auf, wobei von dort ausgehend die axiale Breite zur Mantelfläche des Gummirings 55 degressiv abnimmt, wie Fig. 8 erkennen lässt.

Im Hinblick auf die von der Stahlgummibuchse 50 vor allem beim Einfedern des Fahrzeugs aufgenommene Belastung ist der Gummiring 55 nicht symmetrisch in Bezug auf die mit der Schraube bzw. dem Bolzen zusammenfallende zentrale Achse der Stahlgummibuchse. Vielmehr ist die Mantelfläche 25 des Gummirings 55 exzentrisch in Bezug auf die Achse der Stahlgummibuchse und zugleich exzentrisch in Bezug auf die Stahlbuchse 56. Diese Exzentrizität ist dergestalt, dass in richtiger Einbaulage, d.h. Drehlage, der Stahlgummibuchse sich oben ein geringerer Abstand a₁ zwischen Stahlbuchse 56 und dem Auge des Achslenkers 1 ergibt, als bei dem entsprechenden unteren Abstand a₂. Eine Kerbe 26 oder eine vergleichbare Formstruktur in der Mantelfläche 25 des Gummirings 55 stellt in Verbindung mit einer zeichnerisch nicht dargestellten, korrespondierenden Struktur am Auge des Achslenkers 1, also an der Durchgangsöffnung 10, die richtige Drehlage der Stahlgummibuchse bei deren Montage sicher.

Die Stahlbuchse 56 ist relativ dünnwandig gestaltet, und zeichnet sich so durch ein geringes Gewicht aus. Durch Anziehen der vorzugsweise als Schraubbolzen gestalteten Schraube des Schwenklagers wird die Stahlbuchse 56 zwischen den beiden Innenseiten der Stütze axial eingespannt, und kann so die von dem Gummiring 55 auf die Stahlbuchse 56 übertragenen Kräfte in die Stütze weiterleiten. Der Schraubbolzen ist daher von diesen Kräften weitgehend oder vollständig entlastet, er sorgt nur für die ausreichende axiale Einspannung der Stahlbuchse 56 in der Stütze.

Zur Überbrückung des verbleibenden Radialabstandes zwischen der Innenwandung der Stahlbuchse 56 und der Schraube bzw. dem Bolzen ist in die Stahlbuchse 56 das aus einem leichteren Werkstoff bestehende Distanzstück 57 eingesetzt. Bei der hier beschriebenen Ausführungsform ist das Distanzstück 57, dessen zentrale Durchgangsöffnung 51 in etwa dem Durchmesser des Bolzens entspricht, zur weiteren Gewichtsreduzierung mit Ausnehmungen oder Hohlräumen versehen. Wie Figur 8 erkennen lässt, ist zu diesem Zweck das Distanzstück 57 auf seiner mit der Stahlbuchse 56 verbundenen Außenseite mit nach außen offenen Kanälen bzw. Vertiefungen 58 versehen. Das Distanzstück 57 stützt sich also nicht vollflächig in der Stahlbuchse 56 ab, sondern nur partiell, was aber ohne weiteres ausreichend ist.

Die Kanäle bzw. Vertiefungen 58 erstrecken sich bei der hier beschriebenen Ausführungsform in axialer Richtung, sind also zu beiden Enden des Distanzstücks 57 hin offen. Ein derart gestaltetes Distanzstück 57 lässt sich produktionstechnisch einfach aus einem Strangpressprofil herstellen.

Die Befestigung des Distanzstücks 57 erfolgt vorzugsweise durch Verpressen in der Stahlbuchse 56, wozu der ursprüngliche Außendurchmesser des Distanzstücks 57 geringfügig größer als der zylindrische Innendurchmesser der Stahlbuchse 56 ist. Das Distanzstück 57 kann an beiden Enden bündig mit der Stahlbuchse 56 abschließen. Die Bohrung 51 hat einen Durchmesser ähnlich dem Bolzendurchmesser, so dass eine maximale Druckübertragungsfläche zwischen Bolzen und Distanzstück zur Verfügung steht.

Gemäß den Figuren 7 bis 9 ist die Mantelfläche 25 des Gummirings 55 nicht zylindrisch gestaltet. Vielmehr weist die Mantelfläche 25 einen Durchmesser auf, der von beiden Rändern der Mantelfläche 25 zur Längsmitte der Elastomerbuchse 50 hin zunimmt, so dass sich für die Mantelfläche 25, betrachtet man diese in dem in Fig. 8 wiedergegebenen Längsschnitt, eine leicht dachförmige Kontur ergibt. Der Innenwinkel dieser dachförmigen Kontur beträgt zwischen etwa 175° und 179°, und beträgt vorzugsweise 178°.

Gemäß Figur 9 weist korrespondierend zur Gestaltung der Mantelfläche 25 der Elastomerbuchse auch die Durchgangsöffnung 10 keinen über die Tiefe der Durchgangsöffnung 10 gleichbleibenden Querschnitt auf. Vielmehr weist die Durchgangsöffnung 10 einen Querschnitt auf, dessen Weite D von beiden Öffnungsrändern zur Längsmitte M der Durchgangsöffnung 10 hin zunimmt. Im Längsschnitt gemäß Figur 9 betrachtet, hat die Durchgangsöffnung 10 daher eine einstückige, dachförmige Kontur. Ist daher die Elastomerbuchse 50 mittig in die Durchgangsöffnung 10 eingesetzt, kommt es in Längsrichtung der Durchgangsöffnung 10 zu einer gewissen Zentrierung, da mit jedem die Längsmitte M verlassenden Längsversatz der Elastomerbuchse 50 deren radiale Stauchung und damit ein Verformungswiderstand verbunden wäre.

Ein weiterer Vorteil der zu beiden Seiten und daher doppelt konischen Gestaltung der Durchgangsöffnung 10 ist, bei der Herstellung des für den Guss des Achslenkers 1 erforderlichen Sandkerns 40 (Fig. 4), dessen erleichterte Entformbarkeit aus dem den Sandkern 40 formenden Formwerkzeug.

Gemäß Fig. 9 beträgt auf beiden Seiten der Längsmitte M der Winkel W der inneren Mantelfläche der Queröffnung 90,5° statt der üblichen 90°. Daher ist die Durchgangsöffnung 10 zu beiden Seiten ihrer Längsmitte M konisch verlaufend mit einem Konuswinkel von vorzugsweise 1° gestaltet. Der Winkel W ist derart stumpf, dass die Stahlgummibuchse 50 unter kurzzeitigem radialen Stauchen axial in die Durchgangsöffnung 10 einsetzbar ist, ohne dass zuvor oder anschließend weitere Bauteile des Achslenkers demontiert bzw. montiert werden müssen.

### Bezugszeichenliste

- 1: Achslenker
- 5: Achsbefestigungsbereich
- 6A: Anlagefläche
- 6B: Anlagefläche
- 10: Durchgangsöffnung
- 20: Hohlraum
- 21: Erweiterung
- 22: Hohlraumkonturen
- 23: Wandung
- 25: Mantelfläche
- 26: Kerbe
- 27: Öffnung
- 28: Öffnung
- 30: Stopfen
- 31: Außenfläche
- 32: Halteelement
- 32A: Verriegelungsstruktur
- 32B: Einführschräge
- 33: Kontur des Stopfens
- 35: Rippe
- 40: Gießkern
- 50: Stahlgummibuchse, Elastomerbuchse
- 51: Bohrung
- 55: Gummiring
- 56: Gummiring
- 57: Distanzstück
- 58: Kanäle, Vertiefungen
- A: Öffnung
- a₁: Abstand
- a₂: Abstand
- D: Weite
- L: Längsabschnitt
- M: Längsmitte
- R: Einsetzrichtung
- W: Winkel

## Patentansprüche

1. Fahrzeugachslenker, an dem in Fahrtrichtung hintereinander eine quer zur Fahrtrichtung angeordnete Durchgangsöffnung (10) zur Aufnahme einer den Achslenker gegenüber dem Fahrzeug abstützenden Stahlgummibuchse, und ein Achsbefestigungsbereich (5) ausgebildet sind, wobei sich die Weite (D) des Querschnitts der Durchgangsöffnung (10) über deren Länge ändert, **dadurch gekennzeichnet, dass** die Weite (D) von beiden Enden der Durchgangsöffnung (10) zu deren Längsmitte (M) hin jeweils zunimmt, dass der Fahrzeugachslenker aus einem Gussteil mit einem Hohlraum (20) besteht, der mit der Durchgangsöffnung (10) in Verbindung steht, und dass im Bereich der Verbindung des Hohlraums (20) mit der Durchgangsöffnung (10) ein Stopfen (30) angeordnet und der Durchgangsöffnung (10) zugewandt so gestaltet ist, dass er deren Querschnitt aufnimmt und vervollständigt.

2. Fahrzeugachslenker nach Anspruch 1, **dadurch gekennzeichnet, dass** der Querschnitt der Durchgangsöffnung (10) kreisförmig ist und sein Durchmesser von beiden Enden der Durchgangsöffnung (10) zu deren Längsmitte (M) hin jeweils zunimmt.

3. Fahrzeugachslenker nach Anspruch 1 oder 2, **dadurch gekennzeichnet, dass** die Durchgangsöffnung (10) auf beiden Seiten ihrer Längsmitte (M) konisch verlaufend gestaltet ist, und dass der Konuswinkel zwischen 0,5° und 2°, vorzugsweise 1° beträgt.

4. Fahrzeugachslenker nach einem der vorangehenden Ansprüche, **gekennzeichnet durch** eine axial in die Durchgangsöffnung (10) eingesetzte Stahlgummibuchse (50) mit einer Stahlbuchse (56) zur Aufnahme einer Schraube oder eines Bolzens und einem die Stahlbuchse (56) umgebenen Gummiring (55), dessen äußere Mantelfläche (25) eine Weite aufweist, die von den beiden Rändern zu der Längsmitte (M) der Mantelfläche (25) hin jeweils zunimmt, so dass die Stahlgummibuchse (50) unter kurzzeitigem radialen Stauchen axial in die Durchgangsöffnung (10) einsetzbar ist.

5. Fahrzeugachslenker nach Anspruch 4, **dadurch gekennzeichnet, dass** der Querschnitt des Gummirings (55) kreisförmig ist und sein Durchmesser von beiden Rändern der Mantelfläche (25) zu deren Längsmitte (M) hin jeweils zunimmt.

6. Fahrzeugachslenker nach Anspruch 4 oder 5, **dadurch gekennzeichnet, dass** der Gummiring (55) doppelt konisch unter Ausbildung einer im Längsschnitt dachförmigen Kontur gestaltet ist, wobei der Innenwinkel der dachförmigen Kontur vorzugsweise zwischen 175° und 179° beträgt.

7. Fahrzeugachslenker nach einem der Ansprüche 4 - 6, **gekennzeichnet durch** ein vorzugsweise aus Kunststoff bestehendes Distanzstück (57), welches mit der zylindrischen Innenseite der Stahlbuchse (56) verbunden, und mit einer Durchgangsöffnung (51) für die Schraube bzw. den Bolzen versehen ist.

8. Fahrzeugachslenker nach einem der Ansprüche 4 - 7, **dadurch gekennzeichnet, dass** die Stahlbuchse (56), bezogen auf die Mantelfläche (25) des Gummirings (55), exzentrisch in dem Gummiring (55) angeordnet ist.

9. Fahrzeugachslenker nach Anspruch 7 oder 8 **dadurch gekennzeichnet, dass** der Gummiring (55) auf die Außenseite der Stahlbuchse (56) aufvulkanisiert ist, und dass das Distanzstück (57) und die Stahlbuchse (56) durch einen Presssitz miteinander verbunden sind.

10. Fahrzeugachslenker nach einem der Ansprüche 7 - 9, **dadurch gekennzeichnet, dass** das Distanzstück (57) ein Strangpressprofil ist.

11. Fahrzeugachslenker nach einem der Ansprüche 7 - 10, **dadurch gekennzeichnet, dass** das Distanzstück (57) auf seiner mit der Stahlbuchse (56) verbundenen Außenseite derart mit nach außen offenen Kanälen oder Vertiefungen (58) versehen ist, dass das Distanzstück (57) und die Stahlbuchse (56) nicht vollflächig sondern partiell in Kontakt stehen.

12. Fahrzeugachslenker nach einem der Ansprüche 7 - 11, **dadurch gekennzeichnet, dass** die axiale Länge des Distanzstücks (57) gleich oder geringer als die axiale Länge der Stahlbuchse (56) ist.

13. Fahrzeugachslenker nach einem der Ansprüche 7 - 12, **dadurch gekennzeichnet, dass** die Durchgangsöffnung (51) des Distanzstücks (57) zentrisch bzw. koaxial zu der Innenseite der Stahlbuchse (56) ist.

14. Fahrzeugachslenker nach einem der Ansprüche 7 - 13, **dadurch gekennzeichnet, dass** der Gummiring (55) an seinem Außenumfang eine in Umfangsrichtung wirksame Formschlussstruktur (26) aufweist.

## Claims

1. A vehicle axle link, on which a through-opening (10), arranged transversely to the direction of travel for receiving a steel / rubber bush supporting the axle link with respect to the vehicle, and an axle fastening area (5) are formed one behind the other in the direction of travel, wherein the width (D) of the cross-section of the through-opening (10) changes over the length thereof, **characterized in that** the width (D) increases in each case from the two ends of the through-opening (10) towards the longitudinal middle (M) thereof, the vehicle axle link comprises a casting with a cavity (20) which is connected to the through-opening (10), and a plug (30) is arranged in the region of the connection of the cavity (20) to the through-opening (10) and is designed facing the through-opening (10) in such a way that it receives and completes the cross-section thereof.

2. A vehicle axle link according to Claim 1, **characterized in that** the cross-section of the through-opening (10) is circular and the diameter thereof increases in each case from the two ends of the through-opening (10) towards the longitudinal middle (M) thereof.

3. A vehicle axle link according to Claim 1 or 2, **characterized in that** the through-opening (10) is designed so as to extend in a conical manner on the two sides of the longitudinal middle (M) thereof and the cone angle amounts to between 0-5° and 2°, preferably 1°.

4. A vehicle axle link according to any one of the preceding Claims, **characterized by** a steel / rubber bush (50) inserted axially into the through-opening (10) and having a steel bush (56) for receiving a screw or a bolt and a rubber ring (55) which is surrounded the steel bush (56) and the external face (25) of which has a width which increases in each case from the two edges towards the longitudinal middle (M) of the external face (25) so that the steel / rubber bush (50) is capable of being inserted axially into the through-opening (10) with brief radial compression.

5. A vehicle axle link according to Claim 4, **characterized in that** the cross-section of the rubber ring (55) is circular and the diameter thereof increases in each case from the two edges of the external face (25) towards the longitudinal middle (M) thereof.

6. A vehicle axle link according to Claim 4 or 5, **characterized in that** the rubber ring (55) is designed in the form of a double cone so as to form a contour which is roof-shaped in longitudinal section, wherein the internal angle of the roof-shaped contour preferably amounts to between 175° and 179°.

7. A vehicle axle link according to any one of Claims 4 to 6, **characterized by** a spacer member (57) which preferably consists of plastics material and which is connected to the cylindrical inner side of the steel bush (56) and is provided with a through-opening (51) for the screw or the bolt.

8. A vehicle axle link according to any one of Claims 4 to 7, **characterized in that** the steel bush (56) is arranged eccentrically in the rubber ring (55) relative to the external face (25) of the rubber ring (55).

9. A vehicle axle link according to Claim 7 or 8, **characterized in that** the rubber ring (55) is vulcanized onto the outer side of the steel bush (56), and the spacer member (57) and the steel bush (56) are connected to each other by a press fitting.

10. A vehicle axle link according to any one of Claims 7 to 9, **characterized in that** the spacer member (57) is an extruded profile.

11. A vehicle axle link according to any one of Claims 7 to 10, **characterized in that** the spacer member (57) is provided on the outer side thereof connected to the steel bush (56) with channels or depressions (58) open towards the outside, in such a way that the spacer member (57) and the steel bush (56) are in contact not over their entire faces but in part.

12. A vehicle axle link according to any one of Claims 7 to 11, **characterized in that** the axial length of the spacer member (57) is equal to or less than the axial length of the steel bush (56).

13. A vehicle axle link according to any one of Claims 7 to 12, **characterized in that** the through-opening (51) of the spacer member (57) is central or coaxial with the inner side of the steel bush (56).

14. A vehicle axle link according to any one of Claims 7 to 13, **characterized in that** the rubber ring (55) has on its external periphery a positively locking structure (26) effective in the peripheral direction.

## Revendications

1. Guide d'essieu pour véhicule automobile dans lequel une ouverture de passage (10) agencée transversalement au sens de marche, destinée à recevoir une gaine en caoutchouc et métal soutenant le guide d'essieu par rapport au véhicule automobile, et une zone de fixation d'essieu (5) sont réalisées, la largeur (D) de la section de l'ouverture de passage (10) variant sur sa longueur, **caractérisé en ce que** la largeur (D) augmente respectivement depuis les deux extrémités de l'ouverture de passage (10) en direction du milieu de sa longueur (M), **en ce que** le guide d'essieu pour véhicule automobile est constitué d'une pièce moulée comprenant une cavité (20) qui est en liaison avec l'ouverture de passage (10), et **en ce que** dans la zone du raccordement de la cavité (20) avec l'ouverture de passage (10), un tampon (30) est agencé et réalisé de telle sorte, du côté tourné vers l'ouverture de passage (10), qu'il recouvre et complète sa section.

2. Guide d'essieu pour véhicule automobile selon la revendication 1, **caractérisé en ce que** la section de l'ouverture de passage (10) est circulaire et son diamètre augmente respectivement depuis les deux extrémités de l'ouverture de passage (10) en direction du milieu de sa longueur (M).

3. Guide d'essieu pour véhicule automobile selon la revendication 1 ou 2, **caractérisé en ce que** l'ouverture de passage (10) est réalisée dans une forme s'étendant en cône des deux côtés du milieu de sa longueur (M) et **en ce que** l'angle du cône est compris entre 0,5° et 2° et s'élève de préférence à 1°.

4. Guide d'essieu pour véhicule automobile selon l'une des revendications précédentes, **caractérisé par** une gaine en caoutchouc et métal (50) insérée axialement dans l'ouverture de passage (10) comprenant une gaine métallique (56) destinée à recevoir une vis ou un boulon et une bague en caoutchouc (55) entourant la gaine métallique (56), dont la surface d'enveloppement extérieure (25) présente une largeur qui augmente respectivement depuis les deux bords en direction du milieu de la longueur (M) de la surface d'enveloppement (25) de telle sorte que la gaine en caoutchouc et métal (50) peut être insérée axialement dans l'ouverture de passage ( 10) avec un écrasement radial de courte durée.

5. Guide d'essieu pour véhicule automobile selon la revendication 4, **caractérisé en ce que** la section de la bague en caoutchouc (55) est circulaire et son diamètre augmente respectivement depuis les deux bords de la surface d'enveloppement (25) en direction du milieu de sa longueur (M).

6. Guide d'essieu pour véhicule automobile selon la revendication 4 ou 5, **caractérisé en ce que** la bague en caoutchouc (55) est réalisée en forme de double cône en créant un contour en forme de toit dans sa coupe transversale, l'angle intérieur du contour en forme de toit étant de préférence compris entre 175° et 179°.

7. Guide d'essieu pour véhicule automobile selon l'une des revendications 4 à 6, **caractérisé par** une entretoise (57) de préférence constituée de matière plastique qui est en liaison avec le côté intérieur cylindrique de la gaine métallique (56) et qui est pourvue d'une ouverture de passage (51) pour la vis ou le boulon.

8. Guide d'essieu pour véhicule automobile selon l'une des revendications 4 à 7, **caractérisé en ce que** la gaine métallique (56) est agencée en position excentrique dans la bague en caoutchouc (55) par rapport à la surface d'enveloppement (25) de la bague en caoutchouc (55).

9. Guide d'essieu pour véhicule automobile selon la revendication 7 ou 8, **caractérisé en ce que** la bague en caoutchouc (55) est fixée par vulcanisation sur le côté extérieur de la gaine métallique (56) et **en ce que** l'entretoise (57) et la gaine métallique (56) sont assemblées l'une avec l'autre à la presse.

10. Guide d'essieu pour véhicule automobile selon l'une des revendications 7 à 9, **caractérisé en ce que** l'entretoise (57) est un profilé filé.

11. Guide d'essieu pour véhicule automobile selon l'une des revendications 7 à 10, **caractérisé en ce que** l'entretoise (57) est pourvue, sur son côté extérieur en liaison avec la gaine métallique (56), de canaux ou de creusements (58) ouverts vers l'extérieur de telle sorte que l'entretoise (57) et la gaine métallique (56) ne sont pas en contact sur la totalité de leur surface, mais seulement partiellement.

12. Guide d'essieu pour véhicule automobile selon l'une des revendications 7 à 11, **caractérisé en ce que** la longueur axiale de l'entretoise (57) est inférieure ou égale à la longueur axiale de la gaine métallique (56).

13. Guide d'essieu pour véhicule automobile selon l'une des revendications 7 à 12, **caractérisé en ce que** l'ouverture de passage (51) de l'entretoise (57) est en position centrée ou coaxiale par rapport au côté intérieur de la gaine métallique (56).

14. Guide d'essieu pour véhicule automobile selon l'une des revendications 7 à 13, **caractérisé en ce que** la bague en caoutchouc (55) présente, sur sa circonférence extérieure, une structure de liaison mécanique (26) agissant dans la direction de la circonférence.
